# EUROPEAN PATENT SPECIFICATION

(11) **EP 2 942 170 B1**
(45) Date of publication and mention of the grant of the patent: **27.06.2018**
(21) Application number: 15164829.2
(22) Date of filing: 23.04.2015
(51) Int. Cl.: B28B 5/04, B28B 7/00, B28B 17/00, G05B 19/418

(54) **METHOD FOR CASTING CONCRETE PRODUCTS**
VERFAHREN ZUM GIESSEN VON ZEMENTPRODUKTEN
PROCÉDÉ POUR MOULER DES PRODUITS EN BÉTON

(30) Priority: 05.05.2014 FI 20145405
(43) Date of publication of application: 11.11.2015
(73) Proprietor: Elematic Oyj, 37801 Akaa (FI)
(72) Inventor: Eilola, Jani, FI-37560 Lempäälä (FI)
(74) Representative: Berggren Oy, Helsinki & Oulu

(56) References cited:
- EP-A2- 2 017 047
- US-A1- 2014 005 821
- REINHOLD MANNEL: "Increasing use of RFID technology for production boards RFID bei Unterlagsplatten auf dem Vormarsch", BFT INTERNATIONAL, BAUVERLAG, GUTERSLOH, DE, vol. 80, no. 4, 1 April 2014 (2014-04-01), pages 26-35, XP001590035, ISSN: 0373-4331

## Description

The present invention relates to casting concrete products in molds with a circulating line casting process. More precisely the present invention relates to a method for casting concrete products utilizing a circulating line casting process comprising a plurality of casting mold tables movable between different workstations.
Circulating line casting process is a casting process where the mold tables, on which the casting molds are built, are mounted on tracks and circulate through the phases of the casting process, after which the mold tables are returned for a new cycle.
The circulating line is formed of a plurality of workstations between which the casting mold is transferred in different stages of the casting process. In the first stage of the circulation line the mold table is cleaned. In next stage the mold table is furnished with fixed and detachable mold sidewalls to form the casting mold in the mold table and other required equipment, such as reinforcements etc., are set on the mold. After the furnishing stage casting of the concrete mass to the mold is carried out, together with required vibrating actions during the casting. The casting of concrete mass into the mold can be carried out in different stages if for example different layers need to be added to the product to be cast such as insulation layers in cases of insulated wall elements. When casting of concrete mass to the mold is done, the upper surface of the product to be cast is leveled and other required surface treatment steps are carried out. Next the mold together with the fresh cast product is moved to curing stage, which generally takes place at a curing chamber where temperature during the curing can be monitored and adjusted if required. When the cast product is cured, the mold is taken to demolding, where the mold sidewalls are removed from the mold table after which the cast product is removed from the mold generally together with tilting of the mold. After this stage the mold is ready for new cleaning stage and for the process of casting a new product. The movement of molds from one workstation to another is generally implemented with manual operation of the transferring equipment after required work steps in the workstation to the mold table are done and the next workstation is ready to receive the mold table, or there is empty buffer zone located after the workstation.

The circulating line casting process may also be equipped with an automatic control system, but this requires that the mold tables are equipped with suitable identification means, such as suitable tags or coding on metal plates, which are read by stationary sensors along the circulating line, so that the location of the mold tables is input to the automatic control system when mold tables pass the sensors. This allows automatic monitoring of the operation of the circulating line casting process by the automatic control system. Further, the automatic control system may be used to provide required materials as well as relating product information to a specific mold and mold table in time for each workstation.

In forced circulation processes, such as circulating line casting process, excess or time consuming work load of a single workstation always affects the efficiency of the whole process by creating bottlenecks in the process. Information and data of these bottlenecks allows for improvement of the whole process, as well as allows possible anticipatory actions in process design.

In the present invention time data for each workstation of the circulating line casting process is followed and collected. This collected time data can then be used to identify bottlenecks in the casting process, so that the efficiency of the casting process can be improved.

In the method of the invention concrete products are cast with a circulating line casting process, where casting mold tables are transferred from one workstation to another, wherein the time which a mold table remains in a workstation is determined and stored for further analysis. This time determination may be implemented by timing the stay of a mold table in a workstation, or the arrival time and departure time of a mold table may be recorded for a workstation and the time which the mold table stayed in the workstation may be determined from these recorded arrival and departure times, for example.

Further, in the method of the invention the time determination for a workstation is carried out only if the next workstation has been free for a predetermined time period or longer than the predetermined time period. The suitable predetermined time may be 1 minute or 30 seconds, for example.

In publication US 2014/0005821 A1 is disclosed a production installation with time-indexed historical display and a method for casting concrete products according to the preamble of claim 1, where concrete products are cast with circulating line casting process and several different kinds of data relating to the casting process is collected. This historical data can then be used to define problems and bottlenecks in the circulating line casting process.

In the method of the invention the time is preferably determined at each workstation of the circulating line casting process, preferably also for each mold table.

In the method of the invention the determined times are advantageously analyzed to find bottlenecks in the circulating line casting process, which allows for improvement of the casting process efficiency.

In the method of the invention the operation of the circulating line casting process is preferably controlled to allow passage of a mold table through all or some of the workstations and the required work steps without additional delays in order to obtain correct time determinations for the time a mold table is worked in a workstation.

The above two embodiments allow for exact and correct time determination by eliminating other procedural delays which might delay the movement of the mold table from the workstation after the required work steps in that workstation are done.

In the method of the invention the automatic control system stores the results of the time determinations to a suitable data storing device. This allows for automatic collection of large amounts of statistical time data that allows for better and faster reaction to process bottlenecks even when cast products change continuously.

The automatic collection of the time determination data removes the unreliability related to manual time determinations, as well as the associated costs of additional manual work. Therefore the collected time data is also of better quality and allows for better quality of further analysis based on the collected time data.

The features defining a method according to the present invention are disclosed more precisely in claim 1. Dependent claims disclose advantageous embodiments and features of the invention.

Exemplifying embodiment of the invention and its advantages are explained in greater detail below in the sense of example and with reference to accompanying drawings, where

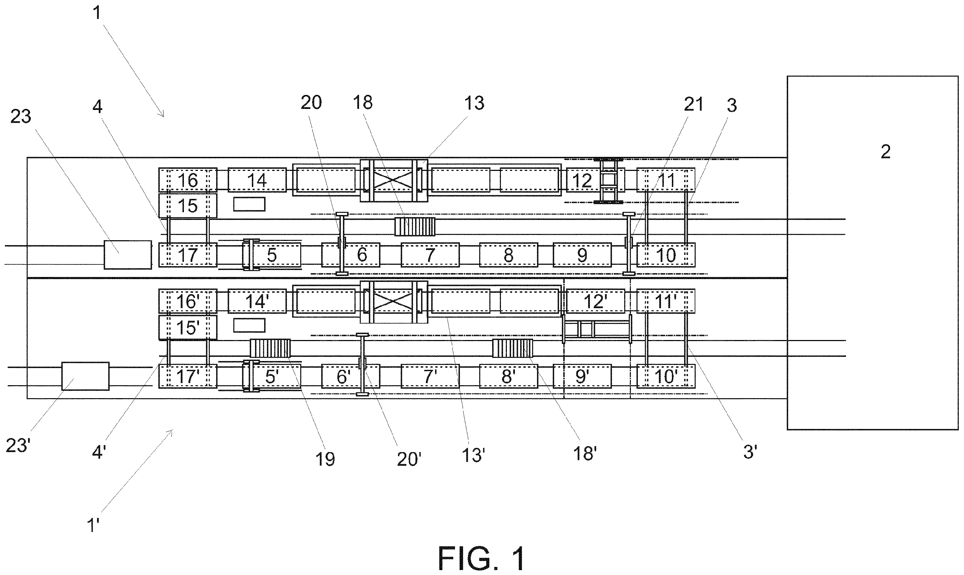

Figure 1 shows schematically a layout of a manufacturing facility with circulating line casting processes utilizing the present invention.

Figure 1 shows schematically a layout of a manufacturing plant, which comprises two circulating line casting processes 1, 1' and a reinforcement shop 2.

The circulating line casting processes 1, 1' comprises plurality of work phases or workstations which are located side by side in the lengthwise direction of the processes in two separate workstation lines, which two workstation lines are connected to each other at transversal transfer tracks 3, 3' and 4, 4' located at the both ends of the workstation lines. The mold tables or molds are transferred from one workstation to another along tracks extending along the workstation lines, and from one workstation line to another with the transversal transfer tracks 3, 3' and 4, 4'.

In the circulating line casting processes 1, 1', the first work phase carried out in first workstation 5, 5' is the cleaning of the mold table, after which the mold table is moved to furnishing stage where mold sidewalls are fixed to the mold table to form the casting mold, which is carried out in workstations 6, 6' and 7, 7'. Once the mold is ready, the required reinforcements are added and in-stalled in the mold in workstations 8, 8', 9, 9', 10, 10' and 11, 11'. Next the casting of the concrete mass is carried out in workstation 12, 12', after which the molds with cast products are moved to a curing chamber 13, 13'. In the curing chamber 13, 13' the molds are stacked is stacks so that plurality of concrete products in their molds can be cured simultaneously. Further, the curing chamber is also equipped with separate walls to form enclosed area, and the temperature and humidity inside the curing chamber modified in order to enhance the curing of the concrete products.

In the circulating line process 1', the casting of the concrete mass into the mold can also be carried in two stages, first at reinforcements workstation 9' and then casting workstation 12'. This allows casting of insulated wall elements, for example, where the wall element to be cast comprises an insulation layer that is added on top of the first cast concrete layer before another layer of concrete is cast on top of the insulation layer. Both of these concrete layers in the insulated wall element often also require separate reinforcements for each concrete layer.

Once the concrete products in their molds are cured, the molds are moved out of the curing chamber 13, 13' to workstations 14, 14' and 15, 15' for demoulding, where the mold sidewalls are removed from the mold table. Between the demoulding workstations 14, 14' and 15, 15' is arranged additional buffer place 16, 16', which can alternatively also be used as an additional demoulding workstation. In the last phase the cured concrete products are removed from the mold table in workstation 17, 17', which is implemented by tilting the mold table, fixing lifting hooks to lifting lugs located in the products and lifting the concrete products with a crane from the workstations to a separate removal carriages 23, 23', the tracks of which are shown in the figure extending from the circulating line casting process lines, and moved to storage. When the cast concrete product is moved from the mold table, the mold table is moved to the workstation 5, 5' for cleaning and for a new casting process.

The reinforcements added and fixed to the molds are prefabricated in the reinforcement shop 2, and taken to the reinforcement workstations 8, 8', 9, 9', 10, 10' and 11, 11' of the circulating line casting processes 1, 1' with carriages 18, 18', which carriages move along a straight tracks extending from the reinforcement shop to the area inside the circulating line casting processes. There can be more than one carriage located in the same track, as is shown with a carriage 19 in the area located inside the circulating line casting process 1'. The manufacturing facility also comprises bridge cranes 20, 20' and 21, for lifting and moving reinforcements and other material from the carriages 18, 18' and 19 to the workstations of the circulating line casting processes 1, 1'.

The transfer of the mold tables from one workstation to the next may be implemented manually, where the transferring equipment is operated manually, or semi-automatically, where the automated transferring operation is started manually, after the required work steps are done in the workstation in question. The circulating line casting processes 1, 1' are monitored with an automatic control system (not shown), which follows the location of each mold table through suitable identification devices, such as RFID tags for example, so that the automatic control system can provide each workstation with materials required for the work carried out in that work station at correct time.

Further, the automatic control system also determines the time each mold table remains at each work station. This determination can be done by measuring the time the mold table remains at the workstation, or the arrival and departure times for the mold table may be registered and the time calculated from these registered times. This type of time determination does not, however, take into account the possible delays caused by other work phases of the circulating line casting processes, which might delay the departure of the mold table from a workstation when the required work for the mold table is already done. Therefore more preferably the automatic control system determines the time a mold table remains and is worked at a workstation so, that the circulating line casting process is controlled by the automatic control system so, that the mold table can depart from the workstation in question immediately after the required work at that workstation is carried out, and the time determination for the workstation is carried out only if the next workstation has been free for a predetermined time period or longer than the predetermined time period. This allows for more proper time determination without the effect of delays caused by other work phases and workstation in the forced circulation process.

The collected time data can then be analyzed to identify the bottlenecks in the circulating line casting process and actions can be taken to remove these identified bottlenecks and to enhance the efficiency of the casting process.

The specific exemplifying embodiment of the invention shown in figures and discussed above should not be construed as limiting. A person skilled in the art can amend and modify the embodiment in many evident ways within the scope of the attached claims. Thus the invention is not limited merely to the embodiments described above.

## Claims

1. A method for casting concrete products, in which method concrete products are cast with a circulating line casting process (1, 1') where casting mold tables are transferred from one workstation to another, and the time which a mold table remains in a workstation is determined and stored for further analysis, wherein the operation of the circulating line casting process (1, 1') is controlled to allow passage of a mold table through all or some of the workstations and the required work steps without additional delays in order to obtain correct time determinations for the time the mold table is worked on in one or more workstations **characterized in that** the time determination for a workstation is carried out only if the next workstation has been free for a predetermined time period or longer than the predetermined time period.

2. A method according to claim 1, wherein the time is determined at each workstation of the circulating line casting process (1, 1'), preferably for each mold table.

3. A method according to claim 1 or 2, wherein the determined times are analyzed to find bottlenecks in the circulating line casting process (1, 1').

4. A method according to any of claims 1-3, wherein the operation of the circulating line casting process (1, 1') is monitored with an automatic control system, which carries out the time determinations and stores the results of the time determinations.

## Patentansprüche

1. Verfahren zum Gießen von Betonprodukten, wobei bei dem Verfahren Betonprodukte mit einem Zirkulationsleitungs-Gießprozess (1, 1') gegossen werden, wobei Gießformmulden von einer Arbeitsstation zu einer anderen übertragen werden, und die Zeit, die eine Formmulde in einer Arbeitsstation bleibt, wird bestimmt und zur weiteren Analyse gespeichert, wobei der Betrieb des Zirkulationsleitungs-Gießprozesses (1, 1') so gesteuert wird, dass er einen Durchgang einer Formmulde durch alle oder einige der Arbeitsstationen und die erforderlichen Arbeitsschritte ohne zusätzliche Verzögerungen ermöglicht, um korrekte Zeitbestimmungen für die Zeit zu erhalten, in der an der Formmulde in einer oder mehreren Arbeitsstationen gearbeitet wird, **dadurch gekennzeichnet, dass** die Zeitbestimmung für eine Arbeitsstation nur ausgeführt wird, wenn die nächste Arbeitsstation für einen vorgegebenen Zeitabschnitt oder länger als den vorgegebenen Zeitabschnitt frei gewesen ist.

2. Verfahren nach Anspruch 1, wobei die Zeit jeder Arbeitsstation des Zirkulationsleitungs-Gießprozesses (1, 1') bestimmt wird, vorzugsweise für jede Formmulde.

3. Verfahren nach Anspruch 1 oder 2, wobei die festgestellten Zeiten analysiert werden, um Engpässe im Zirkulationsleitungs-Gießprozess (1, 1') zu finden.

4. Verfahren nach einem der Ansprüche 1 - 3, wobei der Betrieb des Zirkulationsleitungs-Gießprozesses (1, 1') mit einem automatischen Kontrollsystem überwacht wird, welches die Zeitbestimmungen vornimmt und die Ergebnisse der Zeitbestimmungen speichert.

## Revendications

1. Procédé de moulage de produits en béton, dans lequel procédé des produits en béton sont moulés par un processus de moulage à la chaîne en circulation (1, 1') dans lequel des tables à moules de coulée sont transférées d'un poste de travail à l'autre et le temps pendant lequel une table à moules reste dans un poste de travail est déterminé et enregistré pour analyse ultérieure, le fonctionnement du processus de moulage à la chaîne en circulation (1, 1') est contrôlé pour permettre le passage d'une table à moules dans la totalité ou certains des postes de travail et les étapes opératoires requises se déroulent sans retard supplémentaire afin d'obtenir des déterminations de temps correctes pour la durée pendant laquelle la table à moules est traitée dans un ou plusieurs postes de travail, **caractérisé en ce que** la détermination du temps est réalisée seulement si le poste de travail suivant est libre pendant une durée prédéterminée ou pas plus longtemps que la durée prédéterminée.

2. Procédé selon la revendication 1, dans lequel le temps est déterminé à chaque poste de travail du processus de moulage à la chaîne en circulation (1, 1'), de préférence pour chaque table à moules.

3. Procédé selon la revendication 1 ou 2, dans lequel les temps déterminés sont analysés pour trouver les goulots d'étranglement dans le processus de moulage à la chaîne en circulation (1, 1').

4. Procédé selon l'une quelconque des revendications 1 - 3, dans lequel le fonctionnement du processus de moulage à la chaîne en circulation (1, 1') est contrôlé par un système de commande automatique qui effectue des déterminations de temps et sauvegarde les résultats des déterminations de temps.
